# NEW EUROPEAN PATENT SPECIFICATION

(11) **EP 1 086 055 B2**
(45) Date of publication and mention of the opposition decision: **06.04.2011**
(45) Mention of the grant of the patent: 29.05.2002
(21) Application number: 99917906.2
(22) Date of filing: 29.03.1999
(51) Int. Cl.: C03B 37/05, D04H 1/70, D04H 13/00

(54) **MAN-MADE VITREOUS FIBRE BATTS AND THEIR PRODUCTION**
SYNTHETISCHE GLASFASERMATTEN UND DEREN HERSTELLUNG
NATTES DE FIBRES VITREUSES SYNTHETIQUES ET PROCEDE DE PRODUCTION ASSOCIE

(30) Priority: 06.04.1998 EP 98302662
(43) Date of publication of application: 28.03.2001
(73) Proprietor: Rockwool International A/S, 2640 Hedehusene (DK)
(72) Inventor: HANSEN, Lars, Elmekilde, DK-4000 Roskilde (DK)
(74) Representative: Samuels, Lucy Alice
(86) International application number: PCT/EP1999/002149
(87) International publication number: WO 1999/051536

(56) References cited:
- EP-A- 0 374 112
- WO-A-90/07473
- WO-A-97/20780
- DE-A1- 3 940 896
- DE-C1- 4 409 416
- GB-A- 926 749
- US-A- 2 503 067
- US-A- 4 950 355

## Description

This invention relates to novel man-made vitreous (MMV) fibre products in the form of batts and to novel processes for the formation of products of this type. In particular the products have a defined distribution of the concentration of an additive material in the batt. The invention relates particularly to products of this type which are constructed so as to be suitable for use in fire protection.

In this s pecification, when we refer to MMV fibre "batts" we encompass the various forms of rigid and non-rigid MMV fibre products such as rolls, mats, blankets, slabs etc.

It is well known to make MMV fibre batts by centrifugally fiberising a mineral melt to form a cloud of MMV fibres entrained in air by using a centrifugal spinner located in a stream of air and collecting the fibres on a permeable conveyor as a web having first and second opposed edges and first and second opposed surfaces (of which one is in contact with the conveyor) by sucking the air from the cloud through the conveyor whilst the conveyor is travelling in a first direction.

Various types of centrifugal spinner are known for fiberising the mineral melt. Many comprise a disc or cup that spins around a substantially vertical axis. Other centrifugal spinners are cascade spinners or other centrifugal spinners comprising one or more rotors mounted for rotation about a substantially horizontal axis.

In order to make the MMV fibre batt it is known to arrange several spinners of the disc or cup type substantially along the first direction. The thickness of the web on the permeable conveyor thus builds up as the MMV fibres produced by each spinner in turn are collected on the permeable conveyor. The web can then be further treated, for instance by compression, curing, cutting and other desired process steps, to-form the final batt.

If the web is relatively thin, it is conventional to cross-lap the web, which is often referred to as the primary web, so as to form a thicker web, which is often referred to as the secondary web. It is possible to arrange the cross-lapping such that a section extending inwardly from the first face of the secondary web is formed mainly from the first edge region of the primary web and a section extending inwardly from the second face of the secondary web is formed mainly from the second edge region of the primary web. The secondary web has a core section between its first and second face sections. The secondary web then usually undergoes further processing steps such as compression, curing and cutting to form the final batt.

In processes which involve cross-lapping, it is common to use cascade spinners or other centrifugal spinners comprising one or more rotors mounted for rotation about a substantially horizontal axis. Usually a single cascade spinner or other spinner is arranged to provide the fibres which are to be collected on the permeable conveyor as the primary web. For instance this conveyor may be the back or base of a collecting chamber and usually a single spinner is positioned to feed fibres into the chamber and onto the conveyor.

It is known to include additive materials in the MMV fibre batt in addition to the MMV fibres which form the web. For instance it is conventional to include organic binder materials which provide improved strength to the final product. Various other materials have been added to provide particular properties to MMV fibre products as required for their intended final use.

For instance, in International Publication WO-A-97/20780 we describe an MMV fibre product in which is distributed a particulate material which improves the fire resistance properties of the product (ie fire retardant material). In this publication we aim to obtain a substantially uniform distribution of the particulate material throughout the product or batt.

GB-A-926,749 describes different products in which fire retardant materials of mainly different types are distributed such that the concentration of the additive increases from one face of the batt to the opposed face. The face which is provided with the greatest concentration of fire protection additive is intended to be the face which will encounter fire or high temperature (the "fire side").

It is also known to incorporate additives including nutrients for plant growth and clay into MMV fibre products for use in horticulture. These are generally distributed uniformly thoughout the batt.

FR-A-1,321,446 describes a rather different type of product, in which organic fibres are provided on the two faces of the batt.

The prior art describes various methods for inclusion of additive in MMV fibre products. GB-A-926,749, discussed above, employs centrifugal spinners of the first type discussed above. They each comprise a cup which spins around a substantially vertical axis and are arranged in-line along the first direction, ie the direction of travel of the conveyor which carries the air-laid web of MMV fibres. The fire retardant additive is introduced into the clouds of fibres produced by the spinners. The amount of additive injected into each cloud increases in the direction of travel of the conveyor so that the surface of the web in contact with the conveyor (which will form the first face of the final batt) has a low or zero concentration of fire retardant additive whilst the opposed face, which will form the second face of the final batt, has a higher concentration of fire retardant additive. Thus the concentration increases from one face to the other.

EP-A-374,112 describes a method of including binder in an MMVF batt such that the concentration of binder is greatest at the edges of the batt. The system described includes two centrifugal spinners having rotors mounted about a horizontal axis. The two spinners are arranged side by side, ie transverse to the direction of travel of the conveyor on which the air-laid web of fibres is collected. Binder is injected into the cloud of fibres from each of the spinners and additional binder is supplied to the edge regions of the primary web through additional nozzles. This is then cross-lapped so that the regions with highest binder concentration form the two faces of the final batt.

US-A-4,950,355 describes another method of including additive material in the final product. In the process a primary web is formed which is then cross-lapped to form a secondary web using a pendulum system. Binder or mineral fibre material can be added by spraying onto the primary web at the pendulum stage. This system does not aim for anything other than uniform distribution of the additive.

We describe, in our International Publication WO-A-97/20781, a method suitable for distributing additive material essentially uniformly throughout the MMV fibre batt.

In some cases the inclusion of additive materials in order to improve certain properties can lead to a deterioration in other properties. For instance, inclusion of fire retardant additives (and some other additives) gives improvements in fire resistance (or other) properties but can reduce mechanical strength of the batt. It would be desirable to be able to ameliorate these deficiencies without significantly losing the benefit which the additive is originally intended to provide.

We also find that the inclusion of particulate additives can lead to dusting problems, in that some of the particulate additive becomes detached from the product during handling and transport. This problem can be overcome by increasing the levels of binder in the batt. This holds the particulate additive in the batt, but increases expense and decreases fire resistance.

According to a first aspect of the invention we provide a novel product which is an integral MMV (man-made vitreous) fibre batt according to claim 1.

We find surprisingly that products of this type can provide the desired advantages of inclusion of the additive material whilst minimising some of the attendant disadvantages discussed above.

In particular we find that products of this type have improved mechanical strength in comparison with products in which additive material is distributed evenly throughout the thickness of the batt.

We find that the use of the fire retardant additive material is more efficient, in that an equivalent fire protection effect can be obtained using a lower total amount of fire retardant additive.

In general, loss of additive material and the related costs can be prevented by the new structure trapping the additive material better within the product.

We also find that dusting and consequent loss of additive is reduced. This also improves the efficiency of the additive material.

Products of this type can be made as follows: forming an air laid primary web of MMV fibres and binder material wherein the primary web has first and second opposed surfaces and first and second opposed edge regions and a centre region and transferring the primary web to a cross-lapping point and cross-lapping the primary web at the cross-lapping point to form a secondary web such that the secondary web has a first face section which is formed mainly from the first edge region of the primary web and a second, opposed, face section which is formed mainly from the second edge region of the primary web and a core section between the first and second face sections which is formed mainly from the centre region of the primary web, wherein the process also comprises applying additive material to the first and/or the second surface of the primary web after forming the primary web and at or before the cross-lapping point so that the concentration of the additive material applied to the or each surface in the centre region is higher than the concentration of that additive material applied to the or each surface in each of the first and second edge regions, whereby the core section of the secondary web has a concentration of the additive material which is higher than the concentration of that additive material in each of the first and second face sections.

We find this is a particularly convenient process for producing products in which additive is concentrated in the centre of the final batt, and is the preferred process. Application of the additive material after formation of the primary web at the cross-lapping stage allows control of the application. This process is convenient for applying dry material and can substantially reduce losses of additive during application which can occur in other processes.

According to a second aspect of the invention we provide a further process (defined in claim 4) for producing an MMV (man-made vitreous) fibre batt comprising forming an air laid primary web of MMV fibres and binder material wherein the primary web has first and second opposed edge regions and a centre region by centrifugally fiberising a mineral melt to form a cloud of MMV fibres entrained in air and collecting the fibres on a permeable conveyor as the primary web whilst the conveyor is travelling in a first direction and transferring the primary web to a cross-lapping point and cross-lapping the primary web at the cross-lapping point to form a secondary web wherein the secondary web has a first face section which is formed mainly from the first edge region of the primary web and a second, opposed, face section which is formed mainly from the second edge region of the primary web and a core section between the first and second face sections which is formed mainly from the centre region of the primary web and solid particulate additive material is incorporated into the primary web by applying it to the cloud of MMV fibres entrained in air wherein the centrifugal fiberisation is conducted using at least one first and at least one second centrifugal fiberising spinner wherein the spinners are arranged substantially transverse to the first direction and the additive material is applied to the cloud of fibres such that the concentration of the additive material in the centre region of the primary web is higher than the concentration of the additive material in each of the first and second edge regions whereby the concentration of additive material in the core section of the secondary web is higher than the concentration of that additive material in each of the first and second face sections.

A further process for making a batt of the type described in the first aspect of the invention is as follows: forming an air laid web of MMV fibres and binder material by centrifugally fiberising a mineral melt to form a cloud of MMV fibres entrained in air and collecting the fibres on a permeable conveyor as the web whilst the conveyor is travelling in a first direction, and in this process the centrifugal fiberisation is conducted using at least one first centrifugal fiberising spinner and at least one second centrifugal fiberising spinner and at least one third centrifugal fiberising spinner wherein the spinners are arranged substantially along the first direction and the at least one first spinner produces the portion of the cloud of fibres which forms the first face section of the batt and the at least one second spinner produces the portion of the cloud of fibres which forms the second, opposed face section of the batt and the at least one third spinner produces the portion of the cloud of fibres which forms the core section between the first and second face sections, and additive material is applied to the portion of the cloud of MMV fibres produced by the at least one third spinner and optionally to the portion of the cloud of MMV fibres produced by the first and second spinners such that the amount of additive applied to the portion of the cloud of fibres produced by the at least one third spinner is greater than the amount of that additive material applied to the portion of the cloud of fibres produced by the first and second spinners, whereby the core section of the batt has a concentration of additive material greater than the concentration of that additive material in each of the first and second face sections.

The product of the first aspect of the invention is an integral product having at least three sections as defined, which are integral with one another. That is, the sections are not preformed and subsequently bonded at their interface to form a layered or laminated product.

In the product of the invention the concentration of the defined additive material is higher in the core section than in each of the first and second face sections. The product may contain other types of additive material. In this case, one or more of the other additive materials may be distributed evenly throughout the thickness of the product or variably in such a way that they do not have an increased concentration in the core section, provided that at least the defined additive material is distributed in the defined manner. In this specification, references to "the additive material" generally mean the additive material which is concentrated in the core section.

Products of the invention include those in which organic binder material is distributed substantially uniformly throughout the thickness of the batt but which also contain the defined additive material distributed such that its concentration is highest in the core section. The binder in such cases may be distributed such that its concentration is greater in the face sections.

In the process of the invention. The additive material is a solid material and is particulate. Suitable solid particulate additives include finely comminuted mineral fibres made by crushing MMVF products, comminuted organic materials such as vegetable fibres and hydrophilic materials such as clay or ground minerals or mixtures thereof, added to promote hydrophilic properties (for instance in horticultural and other media). Dense, heavy additives of density greater than the density of the fibres, in particular at least 2.5 t/m³, can be used for acoustic insulation products. Examples are minerals, especially minerals containing iron. Preferred additives are fire retardant additives.

In the first aspect of the invention it is essential that the additive is a fire retardant additive as defined in claim 1.

Suitable preferred fire retardant additives are described in our international publication WO-A-97/20780. Preferred materials for use in the process of the invention include carbonates and hydrates which decompose endothermically at a temperature above 200°C. These materials are essential in the product of the invention. Such materials liberate carbon dioxide and/or water of crystallisation at temperatures above 200°C. Suitable materials are magnesium hydroxide, calcite (calcium carbonate), dolomite, siderite, aragonite, magnesite, brucite, magnesium carbonate, barium carbonate, barium hydroxide, ferric hydroxide, ferrous hydroxide, pyrite, and silicon compounds with water of crystallisation. Magnesium hydroxide is preferred.

Materials which liberate carbon dioxide, preferably at temperatures above 400°C, more preferably above 600°C, can be used. Examples include calcium carbonate, which liberates carbon dioxide endothermically at temperatures in the range 700 to 1,000° Other suitable materials are crystalline materials which liberate water of hydration at above 200°C, preferably above 240°C, for instance 270 to 370°C or higher.

The fire retardant additive is an endothermic material and is provided in a particulate form which is heat stable at temperatures up to 200°C. That is, it does not undergo substantial endothermic decomposition at temperatures of 200°C or less, preferably 240°C or less, in the form in which it is provided.

One way of achieving this heat stability is by providing a particulate additive formed from a material which has the chemical property that it does not undergo decomposition at temperatures below 200°C. That is, molecules of the material can decompose only at temperatures above 200°C. Materials of the type discussed above fall into this category.

Heat stable endothermic particulate materials can also be provided using materials which have the chemical property that their molecules do undergo endothermic decomposition at temperatures below 200°C but are provided in such a form that they are protected from exposure to high temperature and the particles do not undergo substantial decomposition when the product in which they are contained is subjected to temperatures up to 200°C. Such particulate materials may undergo small amounts of decomposition at temperatures of up to 200°C, but do not undergo substantial decomposition and thus are heat stable.

For instance, materials which would liberate carbon dioxide and/or water of crystallisation at temperatures below 200°C when in fine particle form can be provided in the form of especially coarse particles. Materials of this type in the form of very coarse particles can withstand temperatures up to 200°C, often up to 240°C, without substantial decomposition. Suitable mean particle sizes are at least 100 µm, often at least 500 µm, and even up to 3 mm, such as from 0.5 to 1.5 mm.

Preferred materials of this type are aluminium hydroxide, which liberates all of its water of crystrallisation at about 185°C when in fine grain form, but in coarse grain form is stable up to 200°C.

The materials of the type which have the chemical property that their molecules do not decompose at temperatures below 200°C may also be provided as particles of these sizes. However, these materials may also be provided in the form of smaller particles.

The particulate fire retardant material usually has mean particle size above 5 µm. Normally 90% by weight of the particles have size above 5 µm. Preferably the particle size is at least 90% above 10 µm, more preferably at least 90% above 15 µm. Size can be at least 90% below 200 µm, for instance at least 90% below 100 µm. Expressed as mean particle sizes, the preferred ranges are 5 or 10 to 100 µm, preferably 10 to 70 µm, most preferably 15 to 50 µm. A mean particle size of around 15 to 50 µm, often around 35 µm, is often satisfactory.

For some products, however, particle size well above this can be desirable. For instance, mean particle size of from 3 to 10 mm, preferably 3 to 5 mm, can be advantageous. We find that this minimises dusting without the need to use additional binder and can even result in a lower binder requirement. Particulate additives of these sizes are especially useful in the process of the invention for making acoustic insulation products.

The product of the first aspect of the invention may have, in addition to a higher concentration of solid particulate additive in the core section, a higher concentration of binder material, in cases where this is desirable in order to aid bonding of the additive into the mineral wool web.

We find that the product of the first aspect of the invention allows use of less binder in the core section than would be expected. For instance, if the increase in the concentration (usually percentage by weight) of solid particulate additive in the core section in comparison with either of the first and second face sections is X%, then the increase in the required level of binder would be expected to be around X% also. However, in the invention we find that the increase in the level of binder which is required to minimise dusting is often only 1/4 to 1/2 of X. If coarse particles of additive, e.g., of size 3 to 10 mm are used, the increase can be only 1/10 of X.

The product of the first aspect of the invention comprises a core section and first and second face sections. The core section provides up to 90% of the thickness of the batt, usually about 40 to 90% of the thickness of the batt, preferably at least 50%, and often from 70 to 80% of the thickness of the batt. The core section is usually disposed symmetrically within the batt, so that the thicknesses of the first and second face sections are equal, but non-symmetrical configurations can also be used. The concentration of the additive material within the core section may vary within the core section, provided that it is essentially always greater than the concentration in each of the first and second face sections. In particular, the concentration of the additive may decrease towards the edges of the core section as the core section merges with the first and second face sections.

Both of the first and second face sections are free of the additive material.

Concentrations of additive material in the core section are generally from 5 to 250 kg/m³, preferably 10 to 200 kg/m³.

The concentration of additive material in the core section is greater than in the first and second face sections, ie it is increased in the centre of the thickness of the batt. We also find it is advantageous if concentration within the core section is greater at the edges of the core section than in the centre of the core section, ie it is decreased in the centre of the width of the core section. In particular, it is preferred that the concentration of additive is increased in the core section at the edges of the batt. This is particularly advantageous when the batt is intended for use as an insert for a fire door. In such a door, the batt is disposed such that an edge in which the concentration of fire retardant additive is increased within the core section is at the top of the door.

The fibre web can be of any suitable density (measured excluding additives other than conventional binder). Often it is of density below 350 or 300 kg/m³, preferably from 10 to 200 kg/m³, more preferably not more than about 170 kg/m³. Density is generally at least 10, preferably at least 50 kg/m³.

The product can be made by any suitable method, including the novel method of claim 4. Methods A and B belong especially method A, are preferred. The product can be subjected to compression and curing, in particular to cure organic binder.

Method A is as follows: a process of producing an MMV product in which solid particulate additive material is concentrated in the core section by providing a primary web which is cross-lapped to form a secondary web and applying the additive material to the centre region of the primary web before or at the cross-lapping stage.

In the process the primary web is formed by air laying MMV fibres. The web is normally formed on a conveyor. It has a first surface which is in contact with the conveyor and a second surface which is opposed to the first surface and is not in contact with the conveyor.

The primary web has at least three regions disposed across each of its surfaces. These are first and second opposed edge regions extending inwardly from the first and second opposed edges, and a centre region between the first and second edge regions.

Generally the conveyor carries the primary web away from the position at which it is formed in a first direction. The sequence of the three regions of the primary web is usually transverse to the direction of the conveyor.

The air-laid web is formed by centrifugally fiberising mineral melt to form a cloud of air-entrained MMV fibres and collecting the fibres on a conveyor. Fiberisation is done using centrifugal fiberising spinners. The spinners used in the process of the second aspect of the invention can comprise spinning cups or discs which are arranged to rotate around a substantially vertical axis. Preferably, however, each spinner comprises at least one rotor mounted for rotation about a substantially horizontal axis and is preferably a cascade spinner. Thus each spinner which is used for forming the primary web is preferably a cascade spinner comprising a first rotor mounted for rotation about a substantially horizontal axis and at least one further rotor mounted for rotation about a substantially horizontal axis and positioned to receive melt thrown from the first rotor and to throw it off as fibres. Particularly preferred cascade spinners have three and, in particular, four such horizontal rotors arranged in sequence.

Suitable cascade spinners are described in WO-A-92/06047, WO-A-2/00085, EP-A-567,480, WO-A-96/18585, WO-A-96/02068 and WO-A-96/05299.

The primary web is transferred to a cross-lapping point at which the primary web is cross-lapped to form a thicker secondary web. During cross-lapping the first edge region of the primary web tend to form one face of the secondary web and the second edge region of the primary web tend to form the opposite face of the secondary web. The primary web may be a continuous length in which event it will adopt a zig-zag configuration in the secondary web. When the cross lapping is achieved in this manner, the angle of each lap to the transverse direction is usually below 15° and preferably below 10°. Usually at least 4, and preferably 8 or more laps, for instance up to 20 laps, of the web are laid upon one another in order to form the total thickness of the secondary web. As a result of having, for instance, at least 6 laps laid upon one another and extending from one face of the batt to the other, it is ensured that the first face section is formed mainly (e.g., at least 80% by weight) from fibres from the first opposed edge of the primary web and the second face section is formed from fibres of the second opposed edge of the primary web, and the secondary web is integral in that it is not formed by bonding one batt on to another batt. The core section is formed mainly of fibres from the central region of the primary web, with the outer parts of the core merging into a zone formed of the same fibres as on the first and second opposed edges respectively. Thus during cross-lapping the secondary web is formed with a first face section which is made up primarily from the first edge region of the primary web and a second opposed face section which is formed primarily from the second edge region of the primary web. Between the first and second face sections is the core section, which is formed mainly from the centre region of the primary web.

Cross-lapping may be carried out by any suitable technique by which it is possible to lay lengths of web on one another transverse to the direction of travel of the secondary web, but is usually carried out by means of oscillating apparatus through which the primary web is fed. From the oscillating apparatus the primary web is fed to a further conveyor which travels in a direction substantially perpendicular to the direction in which the apparatus oscillates.

Often the oscillating apparatus comprises a'system of the type generally known as a swinging pendulum system, which comprises one or more conveyors. The primary web is fed between these conveyors, which oscillate together and thus cause the primary web to oscillate. The conveyors direct the primary web to pass between them and towards the conveyor for the secondary web.

In method A additive material is applied to the first and/or second surfaces, preferably both surfaces, of the primary web mainly in the centre region. The concentration of additive applied to the centre region is thus greater than the concentrations applied to each of the first and second edge regions. Since the cross-lapping is carried out so that the centre region of the primary web mainly forms the core section of the secondary web the increased concentration of additive material is carried into the core section of the secondary web.

The proportion of the width of the primary web which is taken up by the centre region is normally from around 10% to around 90%, for instance around 10% to around 60%. The concentration of material applied to the first and/or second surfaces is chosen so as to obtain the desired concentration in the core section of the secondary web. The concentrations may be any of those discussed above in connection with the product of the invention.

The cross-lapping is carried out and the application of additive material to the centre region of the primary web is carried out such that the desired thickness of the core section is obtained. The configuration of the secondary web which forms the batt can be any of those discussed above for the product of the first aspect of the invention.

In method A the additive material is applied to the first and/or second surface of the primary web. This is done after formation of the primary web. It can be done prior to the cross-lapping point, for instance whilst the primary web is carried on the conveyor. In such a case additive will generally be applied only to the second surface.

Preferably the additive material is applied to the primary web at the cross-lapping stage. If a pendulum system is used, the additive material can be applied as the primary web passes out from between the oscillating conveyor belts. Additive material can be applied to either of the first and second surfaces and is preferably applied to both surfaces.

Additive material is applied only in the centre region of the primary web.

Application of the additive material to the surface of the primary web is preferably by spraying. The additive solid particulate can be applied for instance as a slurry in a carrier liquid. The carrier liquid can include water. However, if water is used as a carrier liquid it may be desirable in some processes to minimise the level of water so as to minimise the length of time used in later processing stages for drying the secondary web. Therefore in some processes it is preferred that the amount of water in a slurry of additive material is less than 50% by weight of the slurry.

Particulate additive material can also be supplied as a slurry in an organic or inorganic binder material or as a slurry in water which also contains binder. This has the advantage that it aids bonding of the particulate additive material to the primary web.

Alternatively particulate additive material can be sprayed in the form of a substantially dry spray of solid particles of additive. This minimises requirements for drying later in the process. Under these circumstances it can be advantageous to supply the solid particles, although they are substantially dry, together with a minimal amount of binder. For instance the solid particles may be coated with binder, for instance liquid binder or solid binder particles, before spraying. This aids bonding into the secondary web.

We also find that bonding into the secondary web is improved in some processes if the particulate additive is supplied in the form of rather large particles, for instance of size 90% between 3 mm and 10 mm. Such particles can be supplied with or without a small amount of binder, as discussed above.

The rate of application of a spray containing particulate additive can be chosen by experimentation, having regard to the rate of passage of the primary web past the spraying point or points, the concentration of particulate additive which is required on the surface of the primary web and the concentration of the particulate additive in the spray. Suitable rates of spraying particulate additive can be from 0.5 to 10 t/h, for instance from 1 to 6 t/h (total additive-containing spray including carrier, if used).

Spraying is carried out by any suitable spraying technique, such as with the use of one or more nozzles. The number, positioning and direction of the nozzles can be determined by experimentation for any particular process. Nozzles are usually fixed but can be designed so as to be pivotable.

After formation, the secondary web is taken if desired for further processing. The secondary web usually forms the MMVF batt. It may be subjected to compression and curing (for instance to cure organic binder) and is generally cut into portions having dimensions appropriate for the intended end use.

According to a second aspect of the invention we provide a further process, (method B) suitable for preparation of the product of the first aspect of the invention and other products.

We produce an air-laid primary web of MMV fibres by centrifugally fiberising a mineral melt to form a cloud of MMV fibres entrained in air. These entrained fibres are then collected on a permeable conveyor as the primary web whilst the conveyor is travelling in a first direction. The primary web has first and second opposed edge regions and a centre region, the three regions being disposed in sequence transversely across the direction of travel of the conveyor.

The primary web is then transferred to a cross-lapping point and cross-lapped in essentially the same way as described above in connection with method A. Any of the features discussed above in connection with the cross-lapping stage of method A may be incorporated into the process of the third aspect of the invention.

The fiberisation is conducted using at least one first and at least one second centrifugal fiberising spinner which are arranged substantially transversely to the first direction. Each spinner produces a cloud of MMV fibres which form a portion of the cloud of fibres which is collected to form the primary web.

In this process it is possible to use just two centrifugal fiberising spinners. In this case, the portion of the cloud of fibres produced by the first spinner forms the first edge region of the primary web and a portion of the centre region. The portion of the cloud of fibres produced by the second centrifugal fiberising spinner forms the second opposed edge region of the primary web and a portion of the centre region.

Preferably however the process comprises use of first and second spinners and at least one third spinner. In this case, the first spinner or spinners produce the portion of the cloud of fibres which forms the first edge region of the primary web, the second spinner or spinners produce the portion of the cloud of fibres which forms the second edge region of the primary web and the third spinner or spinners produce the portion of the cloud of fibres which forms the centre region of the primary web.

The benefits of the invention, of obtaining controlled variation in additive level across the width of the primary web, can be obtained using just two spinners, but it is particularly advantageous to use three or more spinners.

Although, for simplicity, the invention can be described by reference to a system having first, second and third spinners, it is also possible to perform the invention using four, five or more spinners arranged transverse to the first direction of the collecting conveyor. Thus two or more spinners may be designated as the first spinners, two or more spinners may be designated as the second spinners, and/or two or more spinners may be designated as the third spinners. The third spinners are designated as those which produce the portion of the cloud of fibres which forms the centre region of the primary web which has a higher concentration of additive material than each of the first and second edge regions.

In the process of the second aspect of the invention solid particulate additive material is incorporated into the primary web by applying it to the cloud of MMV fibres entrained in air. The fibres and additive are then collected on the conveyor and the additive is thus incorporated into the primary web.

The additive material may be applied to the cloud of fibres by injection into the cloud of fibres. Injection is from an injection point which can be within the spinner, ie within the area defined by that spinner. Alternatively it may be from an injection point closely adjacent the spinner. For instance injection can be from nozzles in the housing surrounding the spinner or along the axis of one or more of the rotors from which the fibres are formed. Preferably the additive is injected from within the cloud of fibres which is being formed on a fiberising rotor. For instance it can be added using the apparatus described in our International Publication WO-A-97/20779. If the additive material is a solid particulate material injection can be by means of the process described in our International Publication WO-A-97/20781.

If the process is carried out with at least one third spinner, the additive is applied so that the amount of additive applied from the third spinner is greater than that applied from the first and second spinners.

If the process is carried out using only one first and one second spinner, these may be for instance cascade spinners having three or four fiberising rotors. Of these rotors some will be disposed so as to produce fibres which form the centre region of the primary web. In this case the additive can be supplied in greater amounts from those particular rotors than from the rotors positioned at the edges of the spinner arrangement.

In the process a greater amount of additive material is applied to the cloud of fibres in the region which forms the centre region of the primary web. Preferably additive material is applied substantially only in this region, so that substantially no additive material is applied to the portions of the cloud of fibres which form the first and second edge regions. In particular a preferred process of the second aspect of the invention involves use of first, second and at least one third spinner and additive is applied substantially only to the portion of the cloud of fibres formed from the at least one third spinner.

The additive material may be any of the materials discussed above as potential solid particulate additives. It can be applied in any of the forms discussed in connection with method A above.

In this aspect of the invention any of the spinners discussed in connection with method A can be used. When using spinning cup or disc apparatus it is convenient to have several sets of the spinning cups or discs, each set consisting of the three or more spinners arranged transverse to the first direction, but with the sets arranged lengthwise in the first direction. Spinners of the type having rotors arranged to rotate about a substantially horizontal axis are preferred.

The conveyor should be sufficiently wide to receive the fibres from the two, three or more spinners. Often the sides of the conveyor are defined by walls of a collecting chamber, but air streams or any other suitable arrangement for confining the cloud of fibres can be used.

After formation of the secondary web it can be formed into the final batt product, normally after cutting into sections of desirable size. The web is normally further processed, for instance by compression and curing.

A further process for preparing a product according to the first aspect of the invention is as follows. This method solid particulate is referred to as Method C and does not involve cross-lapping of a primary web to form a secondary web. The mineral wool batt is formed directly from fibres produced by centrifugal fiberising spinners and solid particulate is referred to as Method C and additive is injected into this cloud of fibres in such a way that it is concentrated in the core section of the final batt.

In this process an air-laid web of MMV fibres is formed by centrifugally fiberising a mineral melt to form a cloud of MMV fibres entrained in air. This cloud of fibres is collected on a permeable conveyor as the web whilst the conveyor is travelling in a first direction. In this process the web has a first face section extending inwardly from one face, which is in contact with the conveyor and a second, opposed face section extending inwardly from the opposed face, which is not in contact with the conveyor. The web has a core section between the first and second face sections.

The collecting conveyor travels in a first direction and at least two first and second centrifugal fiberising spinners and at least one third centrifugal fiberising spinner are arranged substantially along this first direction (in contrast with the transverse arrangement in the process of the second aspect of the invention).

In method C the at least one first spinner produces the portion of the cloud of fibres which forms the first face section in contact with the conveyor. Proceeding in the direction of movement of the conveyor, the at least one first spinner is followed by the at least one third spinner which produces the portion of the cloud of fibres which forms the core section, which is deposited on top of the first face section. The at least one third spinner is followed by the at least one second spinner, which produces the portion of the cloud of fibres which forms the second face section. The fibres produced by the at least one second spinner are deposited on top of the fibres which form the core section.

As in the second aspect of the invention, the process can involve use of one or more than one of each of the first, second and third spinners. Thus it is also possible to perform the invention using four, five or more spinners arranged along the first direction of the collected conveyor. The first spinners are designated as those which produce the fibres which form the first face section, the second spinners are designated as those which produce the fibres which form the second face section and the third spinners are designated as those which produce the fibres which form the core section having the increased concentration of additive material.

In method C additive is applied to the cloud of fibres such that a greater amount is applied to the portion of the cloud which forms the core section, ie the portion which is formed by the at least one third spinner, than is applied to the portions of the cloud of fibres produced by the first and second spinners, whereby the core section has an elevated concentration of the additive material.

The additive material may be included by injection into the cloud of fibres formed from the spinner, preferably from an injection position within the spinner. Injection can be from a position outside the cloud of fibres formed from the spinner, as described for instance in GB-A-926,749. Alternatively, it may be injected from within the cloud of fibres, for instance from an injection point on the axis about which a fiberising rotor is rotating.

The additive material may be any of the materials discussed above in connection with the product of the first aspect of the invention. It can be applied or injected into the cloud of fibres in any of the forms discussed above in connection with method A.

The spinners can comprise at least one rotor mounted for rotation about a substantially horizontal axis, such as a cascade spinner. However, in method C it is preferred that the spinners comprise spinning cups or discs which are arranged to rotate around a substantially vertical axis.

The conveyor is sufficiently wide to receive the web of fibres. Air streams or other suitable arrangements can be used for confining the cloud of fibres.

After formation of the web it may be used directly as the batt product, normally after cutting into sections of desirable size. The web is normally further processed, for instance by compression and curing.

In methods A, B and C the melt can be any fiberisable mineral melt and in particular can be a glass, slag or stone melt. Often it is a slag or stone melt, for instance containing above 15 wt.% alkaline earth metal oxide and below 10 wt.% alkali metal oxide in its analysis.

The product of the process of the second aspect of the invention can be used in any of the conventional applications for MMV fibre batts, for instance, fire protection, acoustic insulation and thermal insulation and as horticultural media.

The product of the first aspect of the invention can be used for fire protection.

### Brief Description of the Drawings

Figure 1 is a cross-section through a product of the first aspect of the invention.
Figure 2 is a side view of a scheme for carrying out method A.
Figure 3 is a view of the same scheme as Figure 2, viewed in the direction A shown in Figure 2.
Figure 4 is a side view of one method of spraying solid additive onto the primary web.

### Detailed Description of the Drawings

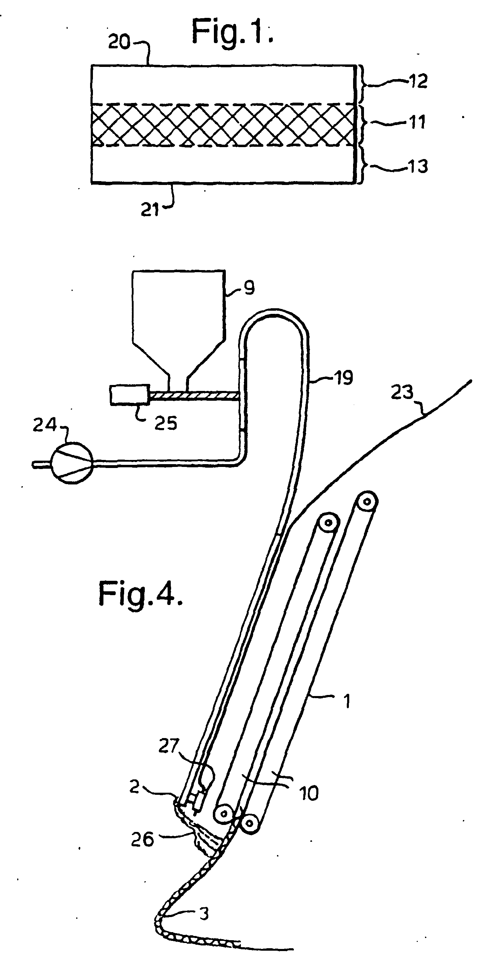

Figure 1 shows a mineral wool batt of the first aspect of the invention. First face section 12 extends inwardly from face 20 and second face section 13 extends inwardly from opposed face 21. Between these sections is core section 11. The three sections 11, 12 and 13 are integral with one another (although the figure shows their borders with broken lines) and formed from air laid mineral fibre containing binder material. The product has been subjected to compression and curing (to cure the binder). Core section 11 contains additive material and face sections 12 and 13 do not contain any additive material other than the binder.

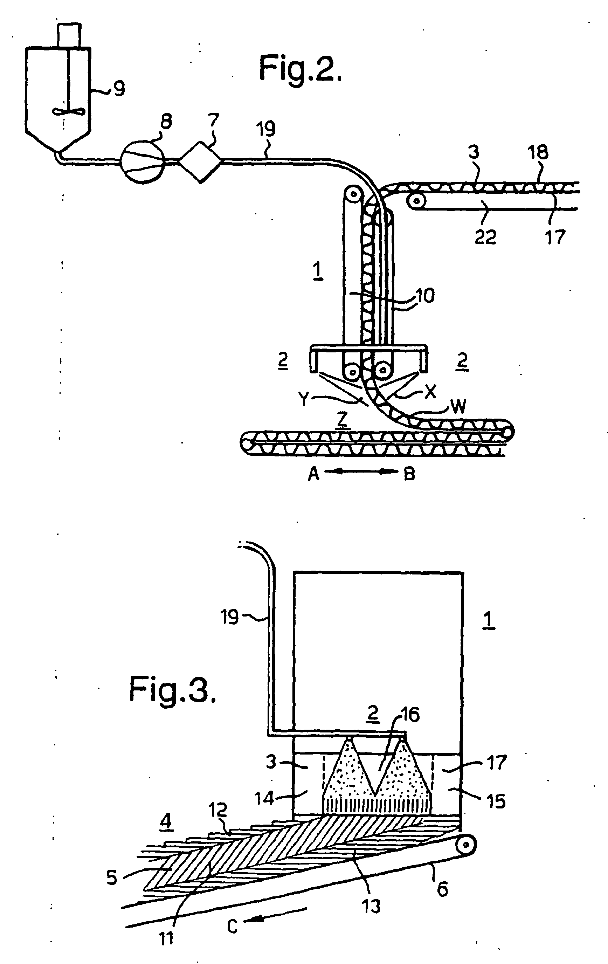

A product of Figure 1 is produced by the scheme of apparatus shown in Figure 2 and, viewed from a different angle, Figure 3.

A primary web 3 is produced by a conventional fiberisation process using a cascade spinner. The fibres are collected on a conveyor or series of conveyors 22. The first surface 17 of the primary web is in contact with the conveyor 22. The opposed second surface 18 is not in contact with the conveyor. The primary web has a first edge region 14, an opposed second edge region 15 and a centre region 16. In the Figures these are shown as separated by broken lines, although they are of course integral.

The primary web 3 passes into a swinging pendulum system 1, formed from a pair of conveyors 10. The primary web passes between the conveyors and down onto a further conveyor 6 (shown in Figure 3). The pendulum system 1 comprising the conveyors 10 oscillates from side to side in the directions A-B as the primary web 3 is fed between the conveyors 10. At the same time the conveyor 6 moves the collected web material in the direction C perpendicular to the direction A-B. As a result the primary web is cross-lapped to form a thicker secondary web 5. The frequency of oscillation of the pendulum 1 and the speed of the conveyor 6 are controlled so that the first face section 12 of the secondary web is formed mainly from the first edge region 14 of the primary web and the second, opposed, face section 13 of the secondary web is formed primarily from the second, opposed edge region 15 of the primary web. The core section 11 of the secondary web 5 is thus formed by the centre region 16 of the primary web.

The scheme of apparatus also comprises an agitated slurry tank 9 in which particulate additive material in the form of a slurry with water and organic binder is held. In the process slurry is passed by means of a slurry pump 8 through a flow meter 7 and a conduit 19 to the pendulum area. The conduit 19 terminates in nozzles 2. These nozzles are connected to and oscillate with the pendulum system 1. The nozzles 2 are arranged so that there are two spray nozzles 2 directed towards each of the first and second surfaces 17 and 18 of the primary web. As shown in Figure 3, the nozzles are also arranged so that they direct slurry essentially only towards the centre region 16 of the first and second surfaces 17 and 18 of the primary web 3.

In operation slurry is passed from the tank through the slurry pump 8 and flow meter 7, through the conduit 19 and out of the nozzles 2. As a section of primary web passes out from between the conveyors 10 it is sprayed on its first surface 17 at position X and on its second surface 18 at position Y. Spraying can be continuous, or discontinuous so that bursts of slurry are sprayed onto the primary web. In this second case, the bursts can be synchronised with the oscillation of the pendulum so that they spray once at the outermost limit of the oscillation and once at the centre. Thus the first surface 17 is sprayed first in position X and then in position W and the second surface 18 is sprayed first in position Y and then in position Z once horizontal.

As a result the spray of slurry is concentrated in the centre region 16 and the core section 11.

Figure 4 shows a system which can also be used in the invention for the application of solid additive materials such as clay. The additive, solid clay granules, is stored in a storage tank 9. The clay granules are transferred from the storage tank 9 to the conduit 19 and the application nozzle 2 by means of a dosing worm 25 and a blower 24. At the dosing nozzle 2 the clay particles are sprayed onto the primary web 3 as it emerges from between the conveyors 10 of the pendulum system 1. An additional preferred feature of this application system is a water conduit 23 along which water is passed to a water spray 27. This is sprayed into the spray of clay particles as they are applied to the primary web 3 in order to suppress dusting.

The invention will now be illustrated with reference to the following example.

### Example

A cascade spinner having four rotors each mounted about a substantially horizontal axis is used to prepare an air-laid primary web of stone wool fibres. The primary web is collected on a conveyor and cross-lapped as described above with reference to Figures 1, 2 and 3. The secondary web is produced at a rate of 3.0 tonnes mineral wool per hour.

A slurry of particulate magnesium hydroxide of size 50% less than 37 µm in water and organic binder in an amount of 1% of the dry material in the slurry is supplied to the nozzles at a rate of 2.0 m³/h, with half of the slurry being delivered to each surface of the primary web.

The secondary web is compressed and cured and cut into batts of a size suitable for use in for instance fire doors.

The thickness of the final batt is 65 mm, of which approximately 50 mm (around 75% of the total thickness) contain magnesium hydroxide, disposed symmetrically in the core of the batt. The final wool density is 150 kg/m³ with binder at a level of 2.5 wt% in the first and second face sections. The density of the magnesium hydroxide in the core section is 160 kg/m³ and the density of binder in the core section is 2.3 wt%.

This product is tested under fire test DIN4102 Part 5 to assess its fire resistance. The product gave a fire resistance time of 90 minutes, when tested in accordance with DIN4102 Part 8.

The strength of the product was estimated to be greater than that of a comparable product having additive distributed through its full thickness. The surfaces of the product appeared clean, without dust. The product had the appearance of a product containing no additive.

## Claims

1. A fire protection product which is an integral MMV (man-made vitreous) fibre batt having a first face section (12) extending inwardly from one face (20), a second face section (13) extending inwardly from the opposed face and a core section (11) between the first (12) and second (13) face sections, wherein the sections (11,12, 13) are integral with one another and are formed of air-laid mineral fibres and contain binder material and wherein the batt contains a solid particulate additive material which is a fire retardant additive material which is a carbonate or hydrate which decomposes endothermically at a temperature above 200°C and wherein the concentration of the additive material in the core section (11) is higher than the concentration of that additive in each of the face sections (12, 13), in which the thickness of the core section (11) is up to 90% of the thickness of the batt and the additive material is present only in the core section (11).

2. A batt according to claim 1 in which the additive material is magnesium hydroxide.

3. A batt according to any preceding claim in which the thickness of the core section (11) is about 75% of the thickness of the batt.

4. A process of producing an MMV (man-made vitreous) fibre batt comprising
forming an air laid primary web (3) of MMV fibres and binder material wherein the primary web (3) has first (14) and second (15) opposed edge regions and a centre region (16)
by centrifugally fiberising a mineral melt to form a cloud of MMV fibres entrained in air and collecting the fibres on a permeable conveyor (22) as the primary web (3) whilst the conveyor (22) is travelling in a first direction and transferring the primary web (3) to a cross-lapping point (1) and
cross-lapping the primary web (3) at the cross-lapping point to form a secondary web (5) wherein the secondary web (5) has a first face section (12) which is formed mainly from the first edge region (14) of the primary web (3) and a second, opposed, face section (13) which is formed mainly from the second edge region (15) of the primary web and a core section (1) between the first (12) and second (13) face sections which is formed mainly from the centre region (16) of the primary web (3) and the solid particulate
additive material is incorporated into the primary web (3) by applying it to the cloud of MMV fibres entrained in air
wherein the centrifugal fiberisation is conducted using at least one first centrifugal fiberising spinner and at least one second centrifugal fiberising spinner wherein the spinners are arranged substantially transverse to the first direction
and the additive material is applied to the cloud of fibres such that the concentration of the additive material in the centre region (16) of the primary web (3) is higher than the concentration of the additive material in each of the first (14) and second (15) edge regions
whereby the concentration of the additive material in the core section (11) of the secondary web (5) is higher than the concentration of the additive material in each of the first (12) and second (13) face sections.

5. A process according to claim 4 in which each fiberising spinner comprises at least one rotor mounted for rotation about a substantially horizontal axis and centrifugal fiberisation is carried out by pouring MMV melt onto the surface of the rotor and flinging the melt from the surface of the rotor as fibres.

6. A process according to claim 4 or claim 5 in which each fiberising spinner is a cascade spinner.

7. A process according to any of claims 4 to 6 in which the centrifugal fiberisation is conducted using first and second fiberising spinners and at least one third centrifugal fiberising spinner whereby the first and second spinners produce the portion of the cloud of fibres which forms the first (14) and second (15) edge regions of the primary web (3) and the or each third spinner is positioned between the first and second spinners and produces the portion of the cloud of fibres which forms the centre region (16) of the primary web (3).

8. A process according to claim 7 in which additive material is injected into the cloud of fibres and a greater amount of additive is injected into the portion of the cloud of fibres formed from the or each third spinner than into the cloud of fibres formed from each of the first and second spinners.

9. A process according to claim 8 in which additive material is injected substantially only into the portion of the cloud of fibres formed from the or each third spinner.

## Patentansprüche

1. Brandschutzprodukt, bei dem es sich um eine integrierte MMV-Fasermatte (synthetische Glasfasermatte) mit einem sich von einer Oberfläche (20) nach innen erstreckenden ersten Oberflächenabschnitt (12), einem sich von der gegenüberliegenden Oberfläche nach innen erstreckenden zweiten Oberflächenabschnitt (13) und einem Kernabschnitt (11) zwischen dem ersten (12) und dem zweiten (13) Oberflächenabschnitt handelt, wobei die Abschnitte (11, 12, 13) miteinander integriert sind und aus im Luftstrom gelegten Mineralfasern gebildet sind und Bindematerial enthalten und wobei die Matte ein Feststoffpartikel-Additivmaterial enthält, bei dem es sich um ein feuerhemmendes Additivmaterial handelt, das ein Karbonat oder Hydrat ist, das sich bei einer Temperatur von über 200 °C endotherm zersetzt und wobei die Konzentration des Additivmaterials im Kernabschnitt (11) höher ist als die Konzentration dieses Additivs in jedem der Oberflächenabschnitte (12, 13), wobei die Dicke des Kernabschnitts (11) bis zu 90 % der Dicke der Matte beträgt und das Additivmaterial nur im Kernabschnitt (11) vorhanden ist.

2. Matte nach Anspruch 1, wobei es sich bei dem Additivmaterial um Magnesiumhydroxid handelt.

3. Matte nach einem der vorangehenden Ansprüche, wobei die Dicke des Kernabschnitts (11) ungefähr 75 % der Dicke der Matte beträgt.

4. Verfahren zum Herstellen einer MMV-Fasermatte (synthetischen Glasfasermatte), das Folgendes umfasst:
Bilden einer im Luftstrom gelegten Primärbahn (3) aus MMV-Fasern und Bindematerial, wobei die Primärbahn (3) eine erste (14) und eine zweite (15) einander gegenüberliegende Randregion und eine Mittenregion (16) hat,
durch Zentrifugalzerfasern einer Mineralschmelze, um eine Wolke von in Luft mitgeführten MMV-Fasern zu bilden, und Sammeln der Fasern auf einem durchlässigen Förderband als die Primärbahn (3), während sich das Förderband (22) in einer ersten Richtung bewegt und Überführen der Primärbahn (3) an eine Kreuzüberlappungsstelle (1), und
Kreuzüberlappen der Primärbahn (3) an der Kreuzüberlappungsstelle, um eine Sekundärbahn (5) zu bilden, wobei die Sekundärbahn (5) einen ersten Oberflächenabschnitt (12) hat, der hauptsächlich aus der ersten Randregion (14) der Primärbahn (3) gebildet ist und einen zweiten, gegenüberliegenden Oberflächenabschnitt (13) hat, der hauptsächlich aus der zweiten Randregion (15) der Primärbahn gebildet ist und einen Kernabschnitt (1) zwischen dem ersten (12) und dem zweiten (13) Oberflächenabschnitt hat, der hauptsächlich aus der Mittenregion (16) der Primärbahn (3) gebildet ist,
wobei das Feststoffpartikel-Additivmaterial in die Primärbahn (3) integriert wird, indem es in die Wolke von in Luft mitgeführten MMV-Fasern eingebracht wird
wobei die Zentrifugalzerfaserung unter Verwendung mindestens einer ersten Zentrifugalzerfaserungs-Schleudervorrichtung und mindestens einer zweiten Zentrifugalzerfaserungs-Schleudervorrichtung ausgeführt wird, wobei die Schleudervorrichtungen im Wesentlichen quer zur ersten Richtung angeordnet sind;
und das Additivmaterial so in die Wolke von Fasern eingebracht wird, dass die Konzentration des Additivmaterials in der Mittenregion (16) der Primärbahn höher ist als die Konzentration des Additivmaterials in der ersten (14) und in der zweiten (15) Randregion
wodurch die Konzentration des Additivmaterials im Kernabschnitt (11) der Sekundärbahn (5) höher ist als die Konzentration des Additivmaterials im ersten (12) und im zweiten (13) Oberflächenabschnitt.

5. Verfahren nach Anspruch 4, wobei die Zerfaserungs-Schleudervorrichtungen jeweils mindestens einen Rotor umfassen, der zur Rotation um eine im Wesentlichen horizontale Achse montiert ist und die Zentrifugalzerfaserung ausgeführt wird, indem MMV-Schmelze auf die Oberfläche des Rotors gegossen und die Schmelze als Fasern von der Oberfläche des Rotors geschleudert wird.

6. Verfahren nach Anspruch 4 oder Anspruch 5, wobei es sich bei den Zerfaserungs-Schleudervorrichtungen jeweils um Kaskaden-Schleudervorrichtungen handelt.

7. Verfahren nach einem der Ansprüche 4 bis 6, wobei die Zentrifugalzerfaserung unter Verwendung von ersten und zweiten Zerfaserungs-Schleudervorrichtungen und mindestens einer dritten Zentrifugalzerfaserungs-Schleudervorrichtung ausgeführt wird, wobei die ersten und die zweiten Schleudervorrichtungen den Anteil der Faserwolke erzeugen, der die erste (14) und die zweite (15) Randregion der Primärbahn (3) bildet und die bzw. jede dritte Schleudervorrichtung zwischen den ersten und den zweiten Schleudervorrichtungen positioniert sind und den Anteil der Faserwolke erzeugen, der die Mittenregion (16) der Primärbahn bildet.

8. Verfahren nach Anspruch 7, wobei Additivmaterial in die Faserwolke eingespritzt wird und eine größere Menge von Additiv in den Anteil der Faserwolke eingespritzt wird, der von der bzw. jeder dritten Schleudervorrichtung gebildet wird als in die Faserwolke, die jeweils von den ersten und zweiten Schleudervorrichtungen gebildet wird.

9. Verfahren nach Anspruch 8, wobei Additivmaterial im Wesentlichen nur in den Anteil der Faserwolke eingespritzt wird, der von der bzw. jeder dritten Schleudervorrichtung gebildet wird.

## Revendications

1. Produit ignifugeant fait d'un matelas isolant constitué de FVA (fibres vitreuses artificielles) ayant une première section de face (12) qui se prolonge d'une face (20) vers l'intérieur, une deuxième section de face (13) qui se prolonge de la face opposée vers l'intérieur et une section d'âme (11) entre les première (12) et deuxième (13) sections de face, dans lequel les sections (11, 12, 13) font corps entre elles, sont formées de fibres minérales par procédé « air-laid » et contiennent un matériau liant, et dans lequel le matelas isolant contient un produit additif en particules solides à fonction ignifugeante composé d'un carbonate ou d'un hydrate qui se décompose endothermiquement à une température supérieure à 200°C et dans lequel la concentration du produit additif dans la section d'âme (11) est supérieure à la concentration dudit additif dans chacune des sections de face (12, 13), dans lequel l'épaisseur de la section d'âme (11) peut atteindre 90 % de l'épaisseur du matelas isolant et le produit additif n'est présent que dans la section d'âme (11).

2. Matelas isolant selon la revendication 1, dans lequel le produit additif est de l'hydroxyde de magnésium.

3. Matelas isolant selon l'une quelconque des revendications précédentes, dans lequel l'épaisseur de la section d'âme (11) est environ 75 % de l'épaisseur du matelas isolant.

4. Procédé pour produire un matelas isolant en FVA (fibres vitreuses artificielles) comprenant :
la formation d'une trame primaire par procédé « air-laid » (3) avec des FVA et un matériau liant dans lequel la trame primaire (3) possède une première (14) et une deuxième (15) zones de bord opposés et une zone centrale (16)
par le défibrage centrifuge d'une masse minérale fondue pour former un nuage de FVA entraînées dans l'air et la collecte des fibres produites sur un tapis roulant perméable (22) pour en faire la trame primaire (3) pendant que le tapis roulant (22) se déplace dans un premier sens, et le transfert de la trame primaire (3) à un point de chevauchement croisé (1) et
le chevauchement croisé de la trame primaire (3) au niveau du point de chevauchement croisé pour former une trame secondaire (5), dans lequel la trame secondaire (5) possède une première section de face (12) constituée principalement par la première zone de bord (14) de la trame primaire (3), une deuxième section de face (13), opposée, constituée principalement par la deuxième zone de bord (15) de la trame primaire et une section d'âme (1) entre les première (12) et deuxième (13) sections de face constituée principalement par la zone centrale (16) de la trame primaire (3),
le produit additif en particules solides étant incorporé à la trame primaire (3) par son application au nuage de FVA entraînées dans l'air
dans lequel le défibrage centrifuge s'effectue au moyen d'au moins d'une première centrifugeuse de défibrage et d'au moins une deuxième centrifugeuse de défibrage agencées sensiblement en travers du premier sens
et le produit additif est appliqué au nuage de fibres de manière que la concentration de produit additif dans la zone centrale (16) de la trame primaire (3) soit supérieure à la concentration de produit additif dans chacune des première (14) et deuxième (15) zones de bord
dans lequel la concentration de produit additif dans la section d'âme (11) de la trame secondaire (5) est supérieure à la concentration de produit additif dans chacune des première (12) et deuxième (13) sections de face.

5. Procédé selon la revendication 4, dans lequel chaque centrifugeuse de défibrage comprend au moins un rotor installé pour tourner sur un axe sensiblement horizontal et dans lequel le défibrage centrifuge s'effectue en versant une masse fondue de FVA sur la surface du rotor et en projetant cette masse fondue depuis la surface du rotor sous la forme de fibres.

6. Procédé selon la revendication 4 ou 5, dans lequel chaque centrifugeuse de défibrage est une centrifugeuse en cascade.

7. Procédé selon l'une quelconque des revendications 4 à 6, dans lequel le défibrage centrifuge s'effectue au moyen d'une première et d'une deuxième centrifugeuses de défibrage et d'au moins une troisième centrifugeuse de défibrage dans lequel les première et deuxième centrifugeuses produisent la partie du nuage de fibres qui forme les première (14) et deuxième (15) zones de bord de la trame primaire (3) et la ou chaque troisième centrifugeuse positionnée entre la première et la deuxième centrifugeuses produit la partie du nuage de fibres qui forme la zone centrale (16) de la trame primaire (3).

8. Procédé selon la revendication 7, dans lequel le produit additif est injecté dans le nuage de fibres et dans lequel une plus grande quantité d'additif est injectée dans la partie du nuage de fibres formé à partir de la ou chaque troisième centrifugeuse que dans le nuage de fibres formé par chacune des premières et deuxièmes centrifugeuses.

9. Procédé selon la revendication 8, dans lequel un produit additif n'est injecté sensiblement que dans la partie du nuage de fibres formée à partir de la ou chaque troisième centrifugeuse.
